Europäisches Patentamt

European Patent Office

Office européen des brevets

(19)

(11) Numéro de publication: **0 028 568**
**B1**

(12) **FASCICULE DE BREVET EUROPEEN**

(45) Date de publication du fascicule du brevet:
06.04.83

(51) Int. Cl.³: **G 01 F 25/00**

(21) Numéro de dépôt: 80401548.5

(22) Date de dépôt: 30.10.80

(54) Jauge d'étalonnage.

(30) Priorité: 05.11.79 FR 7927210

(43) Date de publication de la demande:
13.05.81 Bulletin 81/19

(45) Mention de la délivrance du brevet:
06.04.83 Bulletin 83/14

(84) Etats contractants désignés:
AT CH DE GB LI NL

(56) Documents cités:
**FR-A-1 398 872**
**US-A-3 673 851**
**US-A-3 877 287**

(73) Titulaire: **MESURE, CONTROLE ET AUTOMATISME MESTROLE, Rue Pierre et Marie Curie, F-76650 Le Petit Couronne (FR)**

(72) Inventeur: **Maingot, Georges Fernand Didier, 29, avenue d'Anjou, F-78450 Villepreux (FR)**

(74) Mandataire: **Weinstein, Zinovi et al, Cabinet Z. WEINSTEIN 20, Avenue de Friedland, F-75008 Paris (FR)**

## Jauge d'étalonnage

La présente invention se rapport d'une manière générale à l'étalonnage des compteurs de liquide et concerne plus particulièrement une jauge d'étalonnage pour compteurs de gaz liquéfiés.

On sait que les compteurs doivent être étalonnés et contrôlés pour vérifier si le volume de liquide qui traverse le compteur correspond bien à la valeur du volume affiché sur ledit compteur lors du passage du liquide. En effet, le compteur peut, à la longue présenter des écarts entre le volume de liquide qu'il délivre et le volume de liquide qu'il indique.

Pour remédier à cette situation, il convient évidemment d'étalonner le compteur en utilisant un volume de référence raccordable à l'étalon national et dont la reproductibilité soit aussi fidèle que possible.

Dans ce but, on a déjà proposé des jauges d'étalonnage qui peuvent être raccordées au compteur à contrôler et qui sont tout simplement constituées par des récipients munis de graduations permettant la lecture. De telles jauges sont utilisables pour la plupart des liquides courants, mais elles ne permettent pas une mesure en régime d'écoulement continu, et la mesure demeure nécessairement imprécise. Au surplus, on ne peut pas utiliser ces jauges pour des gaz liquéfiés, qui, comme on le sait, doivent être maintenus à l'état liquide sous pression.

Aussi a-t-on proposé pour les gaz liquéfiés des tubes-étalons qui sont constitués par une capacité tubulaire fermée à ses extrémités et raccordable au compteur à contrôler. Cette capacité contient une sphère formant piston qui peut se déplacer d'un bout à l'autre du tube et dans les deux sens sous l'effet du gaz liquide qui y circule. Et, l'affichage du compteur provoquant l'émission d'impulsions électriques en nombre constant par unité de volume affichée, on compte le nombre d'impulsions produites pendant le déplacement de la sphère qui engendre un volume étalon, de sorte que l'on peut ainsi en déduire l'erreur d'affichage du compteur.

Bien que de tels tubes-étalons donnent satisfaction et permettent des mesures en régime d'écoulement continu, ils ne peuvent être utilisés que pour des débits relativement importants. Cela provient de leur conception et de leur technologie qui impose des dimensions relativement importantes. Or, actuellement, les compteurs de livraison routière de gaz liquéfié carburant sont prévus pour de faibles débits, de sorte que leur étalonnage avec les tubes-étalons ci-dessus ne peut pas être raisonnablement envisagé.

Par ailleurs, on a proposé des jauges-étalons constituées par un piston sur chaque face duquel est montée une tige, l'ensemble pouvant coulisser librement et de manière alternative dans un cylindre définissant un volume étalon raccordable au compteur à vérifier.

Toutefois, une telle jauge à piston antérieure ne permettait pas de réaliser l'équilibrage thermique nécessaire d'un étalon de gaz liquéfié, constitué ici par un cylindre. En effet, les tiges du piston, étant alternativement en contact avec l'air ambiant et avec le liquide en écoulement, constituaient des éléments de transfert thermique nuisant à l'homogénéité des températures, c'est-à-dire finalement à la précision d'étalonnage du compteur.

La présente invention a notamment pour but de remédier à ces inconvénients, ainsi qu'à toutes les lacunes des jauges antérieures en général, en proposant une jauge d'étalonnage pour compteurs de gaz liquéfiés, qui permet d'effectuer des mesures en régime d'écoulement permanent sur des faibles débits, qui résout le problème de l'équilibrage des températures lors de l'écoulement, et qui permet par conséquent un étalonnage des compteurs avec une précision remarquable.

A cet effet, l'invention a pour objet une jauge d'étalonnage d'un compteur de liquide, tel que par exemple un gaz liquéfié, et du type comprenant essentiellement un piston dont chaque face est munie d'une tige et qui est monté librement coulissant dans un cylindre définissant un volume de référence et relié audit compteur pour permettre la mesure de l'écart éventuel existant entre la valeur du volume de liquide affiché par le compteur et le volume de liquide qu'il délivre, caractérisé en ce que chaque tige précitée est creuse et en communication permanente avec la chambre du cylindre.

Suivant une forme d'exécution particulièrement avantageuse de l'invention, l'extrémité libre d'une tige creuse communique avec l'extrémité libre de l'autre tige creuse par un conduit pourvu d'au moins une vanne à commande manuelle ou automatique.

On comprend donc que la communication des tiges creuses entre elles et avec la chambre du cylindre, permet encore mieux le maintient constant de ces éléments à la température du gaz liquéfié qui y circule et qui évacue de façon permanente l'éventuel apport calorifique de la atmosphère ambiante. Ainsi, on supprime tout risque de fausser l'étalonnage du compteur.

Suivant une autre forme d'exécution de la jauge de l'invention, l'une des tiges précitées comporte au voisinage de son extrémité libre un contacteur de commande de comptage d'impulsions électriques, lequel contacteur coopère avec des butées solidaires du bâti supportant la jauge.

Ces butées permettent le comptage d'un nombre donné d'impulsions correspondant à un volume de référence déterminé par le cylindre.

Selon encore une autre forme d'exécution de l'invention, l'une des tiges creuses précitées contient un conduit solidaire du piston et communiquant avec au moins un alésage pratiqué radialement dans le piston et débouchant dans une rainure annulaire usinée dans le périphérie de celui-ci.

Ainsi, on contrôle efficacement l'étanchéité entre les chambres du cylindre de chaque côté du piston.

On notera encore que la périphérie du piston est pourvue d'une bague de frottement axialement retenue par des brides, flasques ou analogues munis de garnitures d'étanchéité.

Selon un mode de réalisation préféré, la communication des tiges creuses avec l'intérieur du cylindre est assurée par des orifices pratiqués radialement dans lesdites tiges de chaque côté du piston.

Le cylindre est obturé à chacune de ses extrémités par une culasse avec bague de frottement pour les tiges creuses et dans laquelle culasse sont prévus des passages pour le montage étanche de deux tubulures d'amenée du liquide.

On notera encore que les butées précitées coopérant avec le contacteur sont montées sur un arbre porté par des supports solidaires du bâti de la jauge, l'une de ces butées étant montée fixe sur l'arbre et l'autre butée étant réglable par déplacement suivant l'axe dudit arbre.

L'invention vise également un compteur pour gaz liquéfié raccordé à une jauge d'étalonnage répondant aux caractéristiques susmentionnées.

D'autres avantages de l'invention apparaîtront mieux dans la description détaillée qui suit et se réfère aux dessins annexés donnés uniquement à titre d'exemple, et dans lesquels:

La figure 1 est une vue schématique d'une jauge d'étalonnage conforme à l'invention et raccordée à un compteur pour gaz liquéfiés.

La figure 2 est une vue partielle et de côté d'une jauge à piston conforme à l'invention et montrée suivant une demi-vue externe et une demi-vue en coupe axiale, et

La figure 3 est une vue en élévation et partiellement en coupe axiale d'un arbre portant les butées destinées à coopérer avec un contacteur solidaire de l'une des tiges du piston.

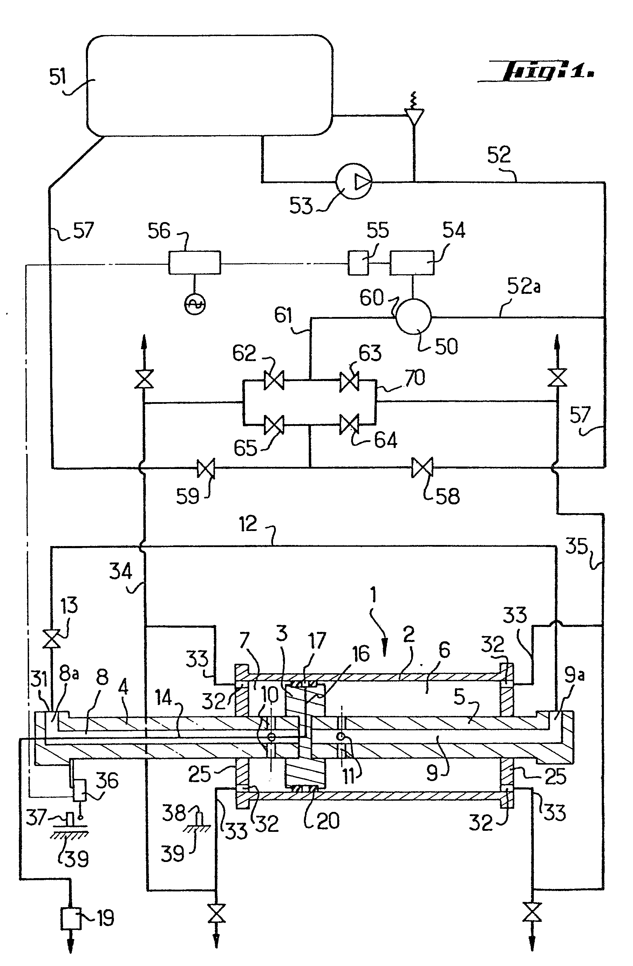

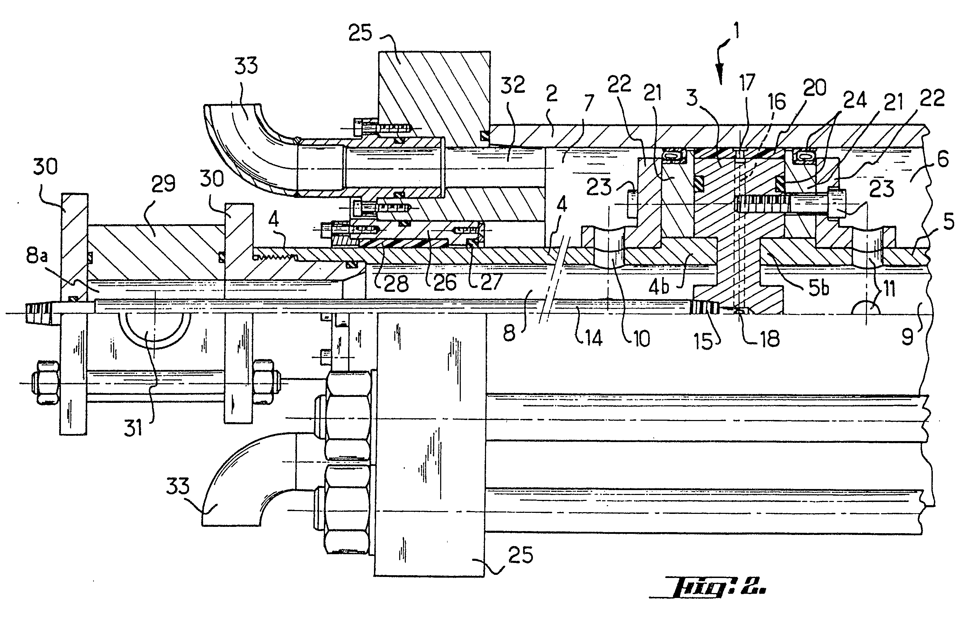

Suivant l'exemple de réalisation représenté sur les figures 1 et 2, une jauge d'étalonnage 1 conforme à l'invention comprend essentiellement un cylindre 2 dans lequel peut coulisser librement un piston 3 muni, sur chaque face, d'une tige intérieurement creuse 4, 5. Le cylindre 2 définit ainsi deux chambres 6, 7 de part et d'autre du piston 3.

Plus précisément, chaque tige creuse, 4, 5 comporte respectivement un canal interne et axial 8, 9. Le canal 8 de la tige 4 communique en permanence avec la chambre 7 du cylindre 2 grâce à des orifices 10, par exemple au nombre de quatre, qui sont percés radialement dans ladite tige 4 et sont situés au voisinage de la face correspondante du piston 3. Il en est de même pour le canal 9 de la tige creuse 5 qui communique en permanence avec la chambre 6 du cylindre 2 par des orifices 11 pratiqués radialement dans ladite tige au voisinage de l'autre face du piston 3, comme on le voit bien sur les figures 1 et 2.

L'extrémité 8a du canal 8 de la tige creuse 4 communique avec l'extrémité 9a du canal 9 de la tige creuse 5 par un conduit 12 pourvu d'au moins une vanne 13 qui peut être commandée manuellement ou automatiquement.

L'une des tiges creuses, à savoir la tige 4 suivant l'exemple représenté, est munie d'une conduite ou tube 14 qui passe dans le canal 8, qui est fixé, par exemple vissé, en 15 sur le piston 3 et qui communique avec des alésages radiaux 16 pratiqués dans le piston 3 et débouchant dans une rainure annulaire 17 usinée dans la périphérie dudit piston. On a montré en 18 sur la figure 2 un orifice assurant la communication entre le tube 14 et les alésages 16 qui, suivant un mode de réalisation préféré, constituent quatre conduits sécants au centre et débouchant dans la rainure 17.

Comme on le voit sur la figure 1, le tube 14 est équipé d'un moyen 19 permettant de contrôler en permanence l'étanchéité entre les chambres 6 et 7 du cylindre 2.

En se reportant à nouveau à la figure 2, on voit que la périphérie du piston 3 est pourvue d'une bague de frottement 20 axialement retenue par des flasques 21 et des brides 22 solidaires du piston 3 par l'intermédiaire de vis 23. Bien entendu, des garnitures et joints d'étanchéité 24 sont prévus entre flasques 21 et cylindre 2, et également entre flasques 21 et piston 3. Comme on le voit encore sur la figure 2, les extrémités respectives 4b et 5b des tiges creuses 4 et 5 assurent le centrage des flasques 21 sur le piston 3.

Le cylindre 2 est fermé à ses extrémités par des fonds ou culasses 25 traversées par les tiges creuses 4 et 5. L'étanchéité des tiges traversant les culasses 25 est assurée essentiellement par un manchon ou analogue 26 comportant un joint 27 ainsi qu'une bague de frottement 28.

L'extrémité libre des tiges 4 et 5 est fermée par un boîtier ou analogue 29 serré entre deux brides 30 et comportant un orifice 31 assurant la communication de l'extrémité 8a du canal 8 de la tige creuse 4 avec la conduite 12 (figure 1) permettant la communication des deux tiges creuses 4 et 5, et agencée parallèlement à l'axe du cylindre 2.

Chaque culasse 25 comporte des passages 32 pour des tubulures 33 d'amenée de liquide. Comme on le voit sur la figure 2, les passages 32 sont disposés tangentiellement à la périphérie interne du cylindre 2 pour permettre d'une part les purges de gaz aux points hauts du cylindre, et d'autre part, les vidanges complètes aux points bas.

En se reportant à la figure 1, on voit que la paire de tubulures 33 associée à chaque culasse 25 est respectivement raccordée à une conduite 34, 35 dont il sera question plus loin à propos du fonctionnement.

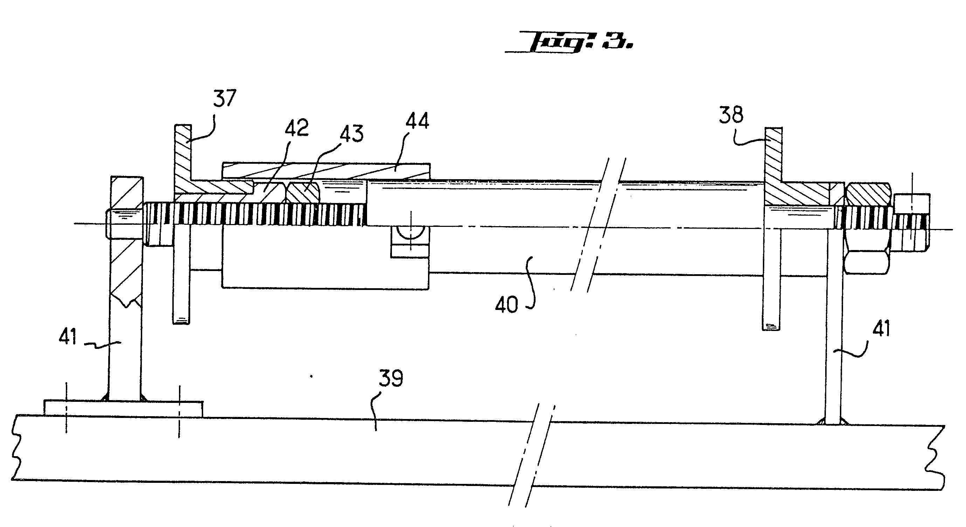

On a montré en 36 sur la figure 1 un contacteur solidaire de l'extrémité de l'une des tiges creuses, à savoir la tige 4 suivant l'exemple représenté. Ce contacteur peut coopérer avec deux butées 37 et 38 solidaires du bâti 39 de la jauge selon l'invention. Plus précisément, la butée 37 est réglable par rapport au bâti 39, tandis que la butée 38 est fixe, comme on le décrira maintenant en détail en se reportant à la figure 3.

Comme on le voit sur cette figure, les butées 37 et 38 sont solidaires d'un arbre 40 porté par des supports 41 soudés sur le bâti ou châssis 39. Comme on l'a dit précédemment, la butée 38 est fixe, tandis que la butée 37 est ajustable le long de l'arbre 40 en étant montée sur un écrou 42 qui peut être vissé dans un sens ou dans l'autre sur l'arbre 40 et qui est blocable au moyen d'un contre-écrou 43. On a montré en 44 sur la figure 3 une bague recouvrant l'ensemble qui vient d'être décrit et qui est ainsi avantageusement inaccessible entre deux étalonnages. La distance entre les butées 37 et 38 doit en effet être réglée avec une grande précision puisque, comme on le verra plus loin, c'est elle qui, lors de la course du piston 3 dans le cylindre 1, déterminera le volume de référence mesuré.

On se reportera maintenant à nouveau à la figure 1 pour décrire le raccordement de la jauge 1 selon l'invention à un compteur 50 pour gaz liquéfiés, étant entendu qu'un tel raccordement ne fait pas partie de la présente invention mais est seulement décrit pour la compréhension du fonctionnement de la jauge d'étalonnage 1 conforme à l'invention.

On a montré en 51 un réservoir de stockage de gaz liquéfié qui communique par un conduit 52, 52a muni d'une pompe 53, avec l'entrée du compteur 50 permettant de mesurer le débit de gaz liquéfié délivré par le réservoir 51 et indiqué ou affiché sur un indicateur de volume 54. A cet indicateur 54 est associé un émetteur 51 d'impulsions électriques présentant une résolution en rapport avec la précision requise. Un dispositif de comptage 56 des impulsions électriques, alimenté par une source de tension S, est raccordé d'une part, à l'émetteur 55 et d'autre part, au contacteur ou détecteur 36.

La conduite 52 retourne au réservoir 51 par l'intermédiaire d'une conduite 57 équipée d'une vanne 58 de réglage du débit par décharge d'une partie du flux d'écoulement, et d'une vanne 59 de réglage de la pression afin d'obtenir une valeur supérieure à la tension de vapeur du produit pour la température du moment.

La sortie 60 du compteur 50 est reliée par une conduite 61 à un circuit 70 équipé de quatre vannes 62, 63, 64 et 65. Un mécanisme approprié (non représenté) assure la commande simultanée des quatre vannes de sorte qu'une paire de vanne diagonalement opposées (par exemple 63 et 65) soient ouvertes tandis que les deux autres 62 et 64 sont fermées. Ainsi, il est possible d'obtenir des sens d'écoulement alternativement inversés du liquide passant par l'intermédiaire des conduits 35 et 34, dans les chambres 6 et 7 du cylindre 2, l'une des chambres étant en remplissage, et l'autre en vidange.

On décrira maintenant le fonctionnement de la jauge d'étalonnage 1 conforme à l'invention.

Par une disposition convenable du système de vannes 62 à 65, c'est-à-dire par exemple dans l'état d'ouverture des vannes 62 et 64 et de fermeture des vannes 63 et 65, le liquide sortant du compteur 50 est envoyé par le conduit 34 dans la chambre 7 du cylindre 2 du côté où le piston 3 est proche de la culasse 25, comme on le voit sur la figure 1. Après quelques centimètres de parcours, le contacteur 36 est basculé par la butée 37, comme on le voit sur la figure 1, ce qui déclenche le comptage électronique des impulsions qui sont émises en permanence par le compteur. On notera ici que l'affichage en 54 du volume provoque l'émission d'impulsions électriques en nombre constant par unité de volume affichée.

En fin de course du piston, le contacteur 36 heurte la butée fixe 38, ce qui provoque l'arrêt du comptage d'impulsions. Il suffit alors d'ouvrir la vanne 13 pour que le liquide continue à circuler en passant par l'intérieur des tiges, c'est-à-dire en allant d'une tige à l'autre, étant bien entendu, comme on l'a vu précédemment, que l'intérieur des tiges est lui-même en communication permanente avec l'intérieur du cylindre 2.

Ainsi, par comptage du nombre d'impulsions produites pendant la course du piston, qui engendre un volume-étalon, et sachant que l'affichage du compteur provoque une émission d'impulsions électriques en nombre constant par unité de volume affichée, on en déduira l'erreur éventuelle d'affichage du compteur, c'est-à-dire l'écart éventuel entre le volume indiqué en 54 par le compteur 50 et le volume de liquide effectivement délivré par le compteur.

Mais ce qui est important à noter, c'est qu'on a réalisé, une jauge d'étalonnage à piston dont les éléments essentiels (piston, tiges, cylindres) sont toujours maintenus à la température du liquide par une circulation continuelle de celui-ci, ce qui permet d'évacuer d'une façon permanente l'éventuel apport calorifique en provenance de l'extérieur et ce qui permet par conséquent d'effectuer un étalonnage avec une grande précision. En effet, on a vu précédemment que le montage de la jauge était tel que lorsque la vanne 13 était ouverte, les chambres 6 et 7 du cylindre 2 étaient en pleine communication entre elles par l'intermédiaire des tiges creuses 4 et 5.

L'invention n'est nullement limitée au mode de réalisation décrit et illustré qui n'a été donné qu'à titre d'exemple. C'est ainsi que la structure et le nombre des vannes, ainsi que les divers moyens d'étanchéité et de contrôle de celles-ci peuvent être quelconque sans pour cela sortir du cadre de l'invention. Celle-ci comprend donc tous les équivalents techniques des moyens décrits ainsi que leurs combinaisons si elles sont effectuées suivant l'esprit de l'invention et mises en œuvre dans le cadre des revendications qui suivent.

**Revendications**

1. Jauge d'étalonnage d'un compteur de liquide, tel que par exemple de gaz liquéfié, et du type comprenant essentiellement un piston dont chaque face est munie d'une tige et qui est monté librement coulissant dans un cylindre définissant un volume de référence et relié audit compteur pour permettre la mesure de l'écart existant entre la valeur du volume de liquide affiché par le compteur et le volume de liquide effectivement délivré par celui-ci, caractérisée en ce que chaque tige précitée est creuse et en communication permanente avec la chambre du cylindre.

2. Jauge selon la revendication 1, caractérisée en ce que l'extrémité d'une tige creuse communique avec l'extrémité libre de l'autre tige creuse par une conduite pourvue d'au moins une vanne à commande manuelle ou automatique.

3. Jauge selon la revendication 1 ou 2, caractérisée en ce que l'une des tiges précitées comporte au voisinage de son extrémité libre un contacteur de commande de comptage d'impulsions électriques, lequel contacteur coopère avec des butées solidaires du bâti supportant la jauge.

4. Jauge suivant l'une des revendications 1 à 3, caractérisée en ce que l'une des tiges creuses précitées contient un conduit solidaire du piston et communiquant avec au moins un alésage pratiqué radialement dans le piston et débouchant dans une rainure annulaire usinée dans la périphérie dudit piston.

5. Jauge selon l'une des revendications 1 à 4, caractérisée en ce que la périphérie du piston est pourvue d'une bague de frottement axialement retenue par des brides et/ou flasques munis de garnitures d'étanchéité.

6. Jauge selon l'une des revendications 1 à 4, caractérisée en ce que la communication des tiges creuses précitées avec l'intérieur du cylindre est assurée par des orifices pratiqués radialement dans lesdites tiges de chaque côté du piston.

7. Jauge selon l'une des revendications précédentes, caractérisée en ce que le cylindre est obturé à chacune de ses extrémités par une culasse avec bague de frottement pour les tiges creuses, et dans laquelle culasse sont prévus des passages pour deux tubulures d'amenée de liquide, lesdits passages étant tangents à la périphérie interne du cylindre précité.

8. Jauge selon la revendication 3, caractérisée en ce que les butées précitées sont montées sur un arbre, porté par des supports solidaires du bâti de la jauge, l'une de ces butées étant montée fixe sur l'arbre et l'autre butée étant réglable par déplacement suivant l'axe dudit arbre.

9. Compteur pour gaz liquéfiés raccordés à une jauge d'étalonnage suivant l'une des revendications 1 à 8.

**Patentansprüche**

1. Eichvorrichtung für einen Flüssigkeitszähler, wie z.B. einen Zähler für verflüssigtes Gas, insbesondere mit einem Kolben, dessen Flächen jeweils mit einer Stange versehen sind und der in einem Zylinder frei gleitend angeordnet ist, wobei dieser Zylinder ein Bezugsvolumen begrenzt und zur Bestimmung bzw. Messung des Unterschiedes zwischen dem durch den Zähler angezeigten Wert und der durch letzteren tatsächlich gelieferten Flüssigkeitsmenge mit dem Zähler verbunden ist, dadurch gekennzeichnet, dass jede Stange (4, 5) hohl ausgeführt ist und mit der Kammer des Zylinders (2) in ständiger Verbindung steht.

2. Eichvorrichtung nach Anspruch 1, dadurch gekennzeichnet, dass das Ende (8a) einer hohlen Stange (4) durch eine Leitung (12), die mit mindestens einem automatischen oder handbetätigten Ventil (13) versehen ist, mit dem freien Ende (9a) der anderen hohlen Stange (5) verbunden ist.

3. Eichvorrichtung nach Anspruch 1 oder 2, dadurch gekennzeichnet, dass eine (4) der genannten Stangen in unmittelbarer Nähe ihres freien Endes mit einem Kontaktgeber (36) zur Steuerung der Zählung von elektrischen Impulsen versehen ist, welcher mit Anschlägen (37, 38), die mit dem Gestell (39) der Eichvorrichtung (1) festverbunden sind, zusammenwirkt.

4. Eichvorrichtung nach einem der Ansprüche 1 bis 3, dadurch gekennzeichnet, dass eine (4) der genannten hohlen Stangen mit einer Leitung (14) versehen ist, die mit dem Kolben (3) festverbunden ist und mindestens mit einer radial in dem Kolben (3) vorgesehenen Bohrung (16) in Verbindung steht, wobei die genannte Leitung in eine ringförmige, am Umfang des Kolbens vorgesehene Nute (17) mündet.

5. Eichvorrichtung nach einem der Ansprüche 1 bis 4, dadurch gekennzeichnet, dass der Umfang des Kolbens (3) mit einem Schleifring (20) versehen ist, der mit Hilfe von Laschen (21) und/oder Flanschen (22) unter Zwischenschaltung von Dichtungen (24) in axialer Richtung festgehalten ist.

6. Eichvorrichtung nach einem der Ansprüche 1 bis 4, dadurch gekennzeichnet, dass die Verbindung der genannten hohlen Stangen (4, 5) mit dem Inneren des Zylinders (2) über Bohrungen (10, 11) hergestellt wird, und dass die genannten Bohrungen beiderseits des Kolbens in den genannten Stangen radial vorgesehen sind.

7. Eichvorrichtung nach einem der vorangehenden Ansprüche, dadurch gekennzeichnet, dass der Zylinder (2) an seinen beiden Enden jeweils durch einen Boden (25) mit Schleifring (28) für die genannten Stangen (4, 5) verschlossen ist, und dass in dem genannten Boden Durchführungen (32) für zwei Flüssigkeitzufuhrrohre (33) vorgesehen sind, die in Bezug auf den inneren Umfang des genannten Zylinders (2) tangential angeordnet sind.

8. Eichvorrichtung nach Anspruch 3, dadurch gekennzeichnet, dass die genannten Anschläge (37, 38) auf einer Welle (40) angeordnet sind, welche durch mit dem Gestell (39) der Eichvorrichtung (1) festverbundene Träger abgestützt ist, wobei der eine Anschlag (38) auf der genannten Welle feststehend angeordnet ist, während der andere Anschlag (37) durch Verschiebung entlang der Achse der genannten Welle einstellbar angeordnet ist.

9. Zähler für verflüssigte Gase, dadurch gekennzeichnet, dass er an eine erfindungsgemässe Eichvorrichtung nach einem der Ansprüche 1 bis 8 angeschlossen ist.

**Claims**

1. A calibrating gauge for a liquid meter such as for example a liquefied-gas meter, of the type comprising essentially a piston each face of which is provided with a rod and which is mounted freely sliding in a cylinder defining a reference volume and connected to the said meter to allow measuring the discrepancy between the value of the volume of liquid displayed by the meter and the volume of liquid actually delivered by the latter, characterized in that each said rod is hollow and communicates permanently with the chamber of the cylinder.

2. A gauge according to claim 1, characterized in that the end of one hollow rod communicates with the free end of the other hollow rod through a duct provided with at least one manually or automatically controlled valve.

3. A gauge according to claim 1 or 2, characterized in that one of the said rods is provided in proximity to its free end with an electric impulse counting control contactor which cooperates with the stops secured to the frame supporting the gauge.

4. A gauge according to one of claims 1 to 3, characterized in that one of the said hollow rods contains a duct secured to the piston and communicating with at least one bore made radially in the piston and opening into an annular slot machined in the periphery of the said piston.

5. A gauge according to one of claims 1 to 4, characterized in that the periphery of the piston is provided with a friction ring retained axially by flanges and/or side plates provided with sealing gaskets.

6. A gauge according to one of claims 1 to 4, characterized in that the communication of the said hollow rods with the interior of the cylinder is ensured by orifices made radially in the said rods on either side of the piston.

7. A gauge according to one of the foregoing claims, characterized in that the cylinder is closed at each of its ends by an end-plate with a friction ring for the hollow rods, in which end-plate are provided passages for two liquid feed pipes, the said passages being tangent to the inner periphery of the said cylinder.

8. A gauge according to claim 3, characterized in that the said stops are mounted on a shaft supported by supports secured to the gauge frame, one of the said stops being fixedly mounted on the shaft and the other stop being adjustable by displacement along the axis of the said shaft.

9. A liquefied-gas meter connected to a calibrating gauge according to one of claims 1 to 8.

Fig.1.

Fig. 2.

_Tag: 3._